# EUROPÄISCHE PATENTSCHRIFT

(11) **EP 0 618 106 B1**
(45) Veröffentlichungstag und Bekanntmachung des Hinweises auf die Patenterteilung: **14.08.1996**
(21) Anmeldenummer: 94104279.8
(22) Anmeldetag: 18.03.1994
(51) Int. Cl.: B60P 3/42

(54) **Kraftfahrzeug, insbsondere Personenkraftwagen**
Motor vehicle, in particular passenger car
Véhicule à moteur, notamment voiture particulière

(30) Priorität: 31.03.1993 DE 4310493
(43) Veröffentlichungstag der Anmeldung: 05.10.1994
(73) Patentinhaber: ADAM OPEL AG, D-65423 Rüsselsheim (DE)
(72) Erfinder: Brandel, Klaus, D-55578 Wallertheim (DE)
(74) Vertreter: Bergerin, Ralf, Dipl.-Ing.

(56) Entgegenhaltungen:
- DE-A- 3 414 617
- DE-B- 2 403 088
- FR-A- 1 587 765
- FR-A- 2 106 832
- FR-A- 2 684 347

## Beschreibung

Die Erfindung bezieht sich auf ein Kraftfahrzeug, insbesondere einen Personenkraftwagen, mit einem Frontmodul, der die Vorderachse mit Lenkung und die Fahrgastkabine mit einer Sitzreihe umfaßt und der Aufnahmen zum lösbaren Ankoppeln eines auswechselbaren, aus Antriebsmotor, Getriebe und Hinterachse bestehenden Antriebsmoduls besitzt.

Ein solches Fahrzeug zeigt die Zeitschrift "Opel-Post", Ausgabe März 1992. Es läßt sich - vorteilhafterweise - ohne besonderen Aufwand auf unterschiedliche Antriebsvarianten, z. B. Otto-Motor, Elektro-Antrieb, Hybrid-Antrieb, umrüsten, indem einfach der jeweilige Antriebsmodul durch einen anderen ausgetauscht wird.

Der Nachteil besteht darin, daß die nutzbare Raumkapazität, die z. B. bei einem PKW durch die Karosserie vorgegeben ist, ungeachtet des jeweiligen Antriebsmoduls, stets die gleiche bleibt.

Zwar ist durch die DE 34 14 617 A1 ein PKW mit abnehmbarer Rückwand bekannt geworden, dessen Raumangebot durch Einsetzen von Karosserieteilen zwischen die übrige Karosserie und die (vorher abgenommene) Rückwand variiert werden kann.

Diese bekannte Lösung erlaubt indessen keinerlei Variationen hinsichtlich verschiedener Antriebsarten. Denn der Antrieb ist fester Bestandteil des Vorderwagens. Außerdem muß, wenn der Wagen durch Einsetzen eines Karosserieteils verlängert wird, die bisherige Hinterachse entfernt und an dem angefügten Karosserieteil wieder befestigt werden, wenn vermieden werden soll, daß das angefügte Karosserieteil nach hinten über die (bisherige) Hinterachse hinausragt. Auch wenn dem anzufügenden Karosserieteil von vornherein eine Hinterachse zugeordnet ist, muß die bisherige Hinterachse demontiert werden, da andernfalls das Fahrzeug auf drei Achsen ruhen würde (unnötig vergrößertes Fahrzeuggewicht, erhöhter Rollwiderstand und damit erhöhter Energiebedarf).

Durch die DE-AS 24 03 088 ist des weiteren ein PKW bekannt geworden, der durch Austausch einzelner Karosserie-Verkleidungsteile im Heckbereich von einer Limousine in ein Kombifahrzeug verwandelt werden kann. Der Antrieb indessen bleibt aber auch bei dieser bekannten Lösung, wie schon beim Gegenstand nach DE 43 14 617 A1, unveränderlich. Im übrigen läßt sich der nutzbare Karosserieraum durch die bekannten Maßnahmen nach DE-AS 24 03 088 auch nur in engen Grenzen variieren; die Grundabmessungen betreffend Radstand und Fahrgastraum können nämlich ebenfalls nicht verändert werden.

Ausgehend von dem geschilderten Stand der Technik ist es die Aufgabe der vorliegenden Erfindung, ein Kraftfahrzeug, insbesondere einen PKW, zu schaffen, das (bzw. der) sich sowohl hinsichtlich des Antriebs wie auch hinsichtlich der Gesamtabmessungen (nutzbarer Innenraum) in wenig aufwendiger Weise variieren läßt.

Die Erfindung löst die Aufgabe bei einem Kraftfahrzeug der eingangs bezeichneten Art durch einen auswechselbaren Heckmodul mit Kupplungselementen, die mit den Aufnahmen am Frontmodul korrespondieren und im Sinne einer lösbaren Verbindung zusammenwirken und mit Aufnahmen zum lösbaren Ankoppeln des Antriebsmoduls.

Die Erfindung ermöglicht - zusätzlich zu dem bekannten Auswechseln des Antriebsmoduls - auch noch Variationen hinsichtlich der Gesamtabmessungen des Fahrzeugs. Das Fahrzeug läßt sich somit in einfacher Weise vom bloßen Zweisitzer zur geräumigen viersitzigen Limousine umgestalten.

Die gegebenen Umrüstungsmöglichkeiten sind optimal, wenn Antriebsmodul und Heckmodul jeweils separate Baueinheiten bilden.

Das Auswechseln des Heckmoduls erfolgt vorteilhafterweise mit den gleichen Mitteln und dadurch in gleicher Handhabung wie bisher beim Austausch des Antriebsmoduls allein.

Eine für Fahrzeuge, bei denen der Frontmodul eine Heckklappe besitzt, die um eine an ihrer Oberkante liegende Horizontalachse schwenkbar ist, besonders vorteilhafte Ausführungsform der Erfindung zeichnet sich dadurch aus, daß der auswechselbare Heckmodul im Dachbereich eine den Konturen der Frontmodul-Heckklappe entsprechende Aussparung aufweist und daß beim Zusammenbau von Frontmodul und Heckmodul die nach oben geschwenkte Frontmodul-Heckklappe die Aussparung des Heckmoduls dichtend verschließt, derart, daß sie einen Teil des Daches des Gesamtfahrzeugs bildet.

Zweckmäßigerweise ist die Frontmodul-Heckklappe von vorn/oben nach hinten/unten schräg abfallend angeordnet, derart, daß sich - an die Heckklappe seitlich angrenzend - winkelförmige Karosserie-Endpartien ergeben. Hierauf aufbauend besteht eine weitere vorteilhafte Ausgestaltung der Erfindung darin, daß der auswechselbare Heckmodul vorn beidseitig entsprechend winkelförmige Karosserie-Aussparungen aufweist, in die die winkelförmigen seitlichen Endpartien des Frontmoduls bei der Montage von Front- und Heckmodul eingreifen.

Auf diese Weise ergibt sich eine sinnvolle konstruktive Ergänzung des Frontmoduls durch den auswechselbaren Heckmodul. Vorteilhafte Weiterbildungen zur praktischen Realisierung der in Rede stehenden Ausführungsform enthalten die Ansprüche 4 und 5.

Für die Gestaltung des auswechselbaren Heckmoduls und dessen Innenraums im einzelnen stehen nun vielfältige Möglichkeiten offen. So bietet es sich für PKW natürlich zunächst einmal an, daß der auswechselbare Heckmodul den Fondbereich, enthaltend eine hintere Sitzreihe, Seitenscheiben und Heckscheibe, sowie den Ladebereich (Kofferraum), bildet bzw. umfaßt.

Es ist aber auch denkbar, daß der auswechselbare Heckmodul einen vom Heck her durch eine oder zwei Türen zugänglichen Laderaum umfaßt, derart, daß das aus Front-, Heck- und Antriebsmodul zusammengesetzte Gesamtfahrzeug einen Kleintransporter mit nur einer vorderen Sitzreihe bildet.

Eine weitere mögliche Variante besteht darin, daß die Heckklappe des Frontmoduls zweigeteilt ausgebildet ist, derart, daß Heckklappenrahmen und -scheibe jeweils unabhängig voneinander verschwenkbar sind. In diesem Fall ergibt sich die vorteilhafte konstruktive Möglichkeit, daß der - hochgeschwenkte - Heckklappenrahmen (mit) zur Verbindung von Front- und Heckmodul dient und die in nach unten geschwenkter Stellung belassene Heckklappenscheibe eine Trennwand zwischen Fahrgastzelle und Rück- bzw. Laderaum bildet.

Weitere Vorteile und Ausgestaltungen der Erfindung sind anhand von Ausführungsbeispielen der Zeichnung und der nachstehenden Beschreibung dieser Ausführungsbeispiele entnehmbar. Es zeigt:
- Fig. 1: einen zweisitzigen PKW in Seitenansicht,
- Fig. 2: - in Explosionsdarstellung - eine Ausführungsform eines aus Front-, Heck- und Antriebsmodul bestehenden Gesamtfahrzeugs von der Seite betrachtet,
- Fig. 3: alternativ zum Antriebsmodul nach Fig. 1 mögliche Antriebsvariante (Antriebsmodul),
- Fig. 4: das Fahrzeug nach Fig. 2 in zusammengebautem Zustand,
- Fig. 5: eine weitere Ausführungsform eines Gesamtfahrzeugs in perspektivischer Darstellung (Front- und Heckmodul getrennt dargestellt) und
- Fig. 6: eine weitere Ausführungsform eines auswechselbaren Heckmoduls in perspektivischer Darstellung.

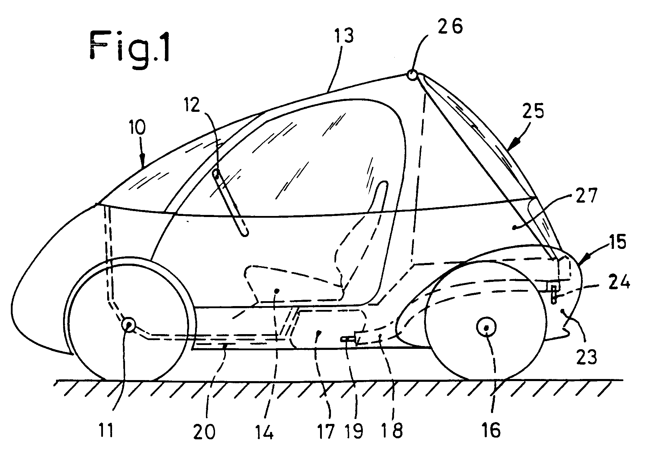

Das aus Fig. 1 ersichtliche Kleinfahrzeug besteht aus einem insgesamt mit 10 bezeichneten Frontmodul, der die Vorderachse 11 mit Lenkung 12 und die Fahrgastkabine 13 mit tragendem Rahmen 20, einer Sitzreihe 14 (z. B. zwei Einzelsitze) umfaßt, und aus einem insgesamt mit 15 bezifferten Antriebsmodul.

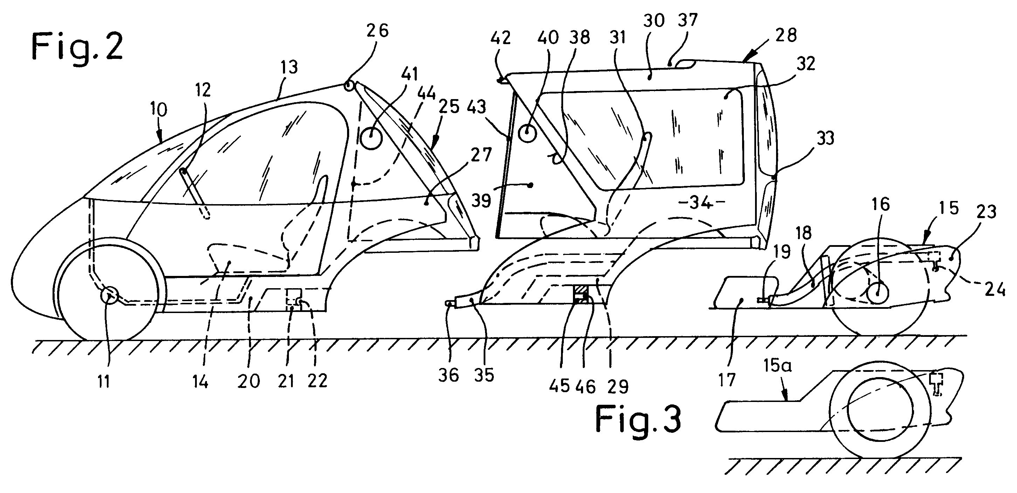

Bei dem Antriebsmodul 15 handelt es sich um einen solchen der auch aus Fig. 2 ersichtlichen Art, enthaltend die Hinterachse 16 mit Differential, einen Verbrennungsmotor mit Getriebe, die üblichen Hilfsaggregate (im einzelnen nicht gezeigt), Kraftstofftank 17 sowie einen hinteren Stoßfänger 23.

Die (lösbare) Befestigung des Antriebsmoduls 15 am Frontmodul 10 erfolgt mittels eines S-förmig gebogenen Verbindungsgestänges 18, an dessen Ende ein Kupplungszapfen 19 angeordnet ist. Der Kupplungszapfen 19 greift in eine unterhalb des Rahmens 20 am Frontmodul 10 befestigte Aufnahme 21 ein, die hierfür eine entsprechende Ausnehmung 22 aufweist. Zusätzlich ist der Antriebsmodul 15 durch Schrauben 24 am rückwärtigen Ende mit dem Rahmen 20 des Frontmoduls 10 verbunden.

Statt des auf einem Verbrennungsmotor basierenden Antriebsmoduls 15 kann aber an den Frontmodul 10 auch der aus Fig. 3 ersichtliche, auf einem Elektromotor basierende Antriebsmodul 15a angekuppelt werden, da dieser die gleichen Außenabmessungen besitzt wie der Antriebsmodul 15 (vgl. Fig. 2 und 3).

Wie des weiteren aus der Zeichnung, insbesondere Fig. 1 und 2, hervorgeht, weist der Frontmodul 10 eine Heckklappe 25 auf, die um eine an ihrer Oberkante liegende Horizontalachse 26 gegenüber der Karosserie 13 verschwenkbar ist. Die Heckklappe 25 ist in ihrer Schließstellung (Fig. 1) von vorn/oben nach hinten/unten schräg abfallend angeordnet, derart, daß sich - an die Heckklappe 25 seitlich angrenzend - winkelförmige Karosserie-Endpartien 27 ergeben (siehe auch Fig. 2).

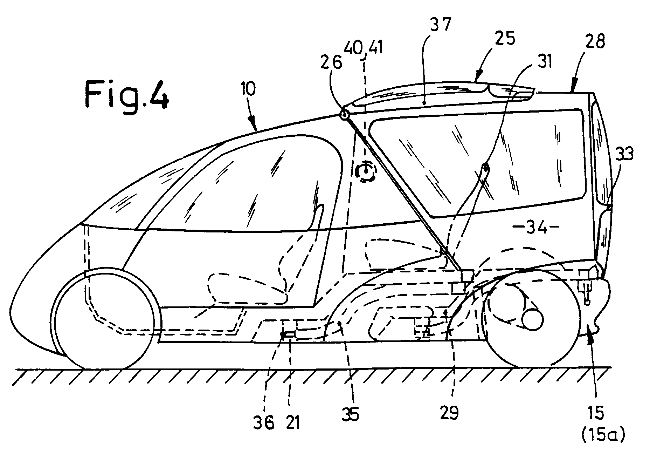

Fig. 2 und 4 zeigen, daß sich das Kleinfahrzeug nach Fig. 1 - nach vorheriger Demontage des Antriebsmoduls 15 - durch Ankoppeln eines insgesamt mit 28 bezifferten Heckmoduls zu einem wesentlich größeren Fahrzeug umrüsten läßt. Bei der Ausführungsform nach Fig. 2 weist der Heckmodul 28 einen tragenden Rahmen 29, eine Fahrgastkabine 30 mit (hinterer) Sitzreihe 31, Seitenfenster 32, Laderaum 34 und eine Hecktür (oder -türen) 33 auf.

Die Besonderheit besteht darin, daß der Heckmodul 28 ein Verbindungsgestänge 35 mit Kupplungszapfen 36 besitzt, welche Elemente den entsprechenden Koppelelementen 18, 19 des Antriebsmoduls 15 gleichen. Damit läßt sich der Heckmodul 28 in einfacher Weise an die (zunächst zum Ankoppeln des Antriebsmoduls 15 vorgesehenen) Aufnahmeelemente 21, 22 am Frontmodul 10 ankoppeln (siehe Fig. 4).

Um den Zusammenbau mit dem Frontmodul 10 zu einem größeren Gesamtfahrzeug (Fig. 4) zu ermöglichen, weist der Heckmodul 28 des weiteren im Dachbereich eine den Konturen der Frontmodul-Heckklappe 25 entsprechende Aussparung 37 auf. Beim Zusammenbau von Frontmodul 10 und Heckmodul 28 verschließt die nach oben geschwenkte Frontmodul-Heckklappe 25 die Aussparung 37 des Heckmoduls 28 dichtend, derart, daß sie einen Teil des Daches des Gesamtfahrzeugs bildet.

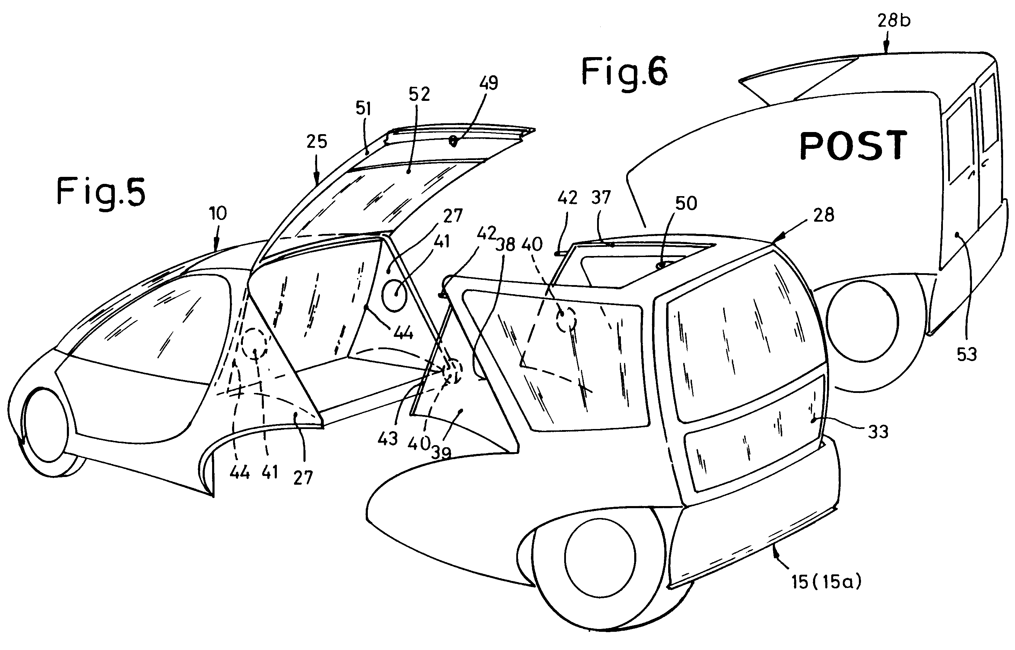

Wie weiterhin aus Fig. 2 ersichtlich ist (vgl. hierzu auch Fig. 5), sind am Heckmodul 28 - vorn beidseitig - winkelförmige Karosserieaussparungen 38 vorgesehen, in die die entsprechend winkelförmigen seitlichen Karosserie-Endpartien 27 des Frontmoduls 10 beim Zusammenbau mit dem Heckmodul 28 eingreifen. Innenseitig der winkelförmigen Aussparungen 38 besitzt der Heckmodul 28 Verbindungsbleche 39, die bei der Montage von Front- und Heckmodul (10, 28) die winkelförmigen Karosserie-Endpartien 27 des Frontmoduls 10 jeweils innenseitig hintergreifen. An den Verbindungsblechen 39 sind seitliche Befestigungselemente 40 vorgesehen, die mit korrespondierenden seitlichen Befestigungselementen 41 am Frontmodul 10 zusammenwirken. Weitere Verbindungselemente 42 sind an der Vorderkante des Dachbereichs des Heckmoduls 28 vorgesehen. Diese greifen in zugeordnete Aufnahmen (nicht gezeigt) an der Hinterkante des Frontmodul-Dachbereichs an (siehe auch Fig. 5).

An den dem Frontmodul 10 zugewandten Vorderkanten der Verbindungsbleche 39 sind Dichtleisten 43 befestigt, die mit im Innern des Frontmoduls 10 angeordneten korrespondierenden Dichtungen 44 in der Montageposition von Front- und Heckmodul zur Anlage kommen (siehe auch hierzu wieder die perspektivische Darstellung von Fig. 5).

Eine weitere, insbesondere aus Fig. 2 ersichtliche, Besonderheit der Erfindung besteht darin, daß an dem tragenden Rahmen 29 des Heckmoduls 28 eine Aufnahme 45 mit Kupplungsausnehmung 46 angeordnet ist, welche Elemente exakt den entsprechenden Kupplungselementen 21, 22 am Frontmodul 10 gleichen. Dadurch wird es möglich, einen geeigneten Antriebsmodul - z. B. 15 (Fig. 1 und 2) oder 15a (Fig. 3) - an den Heckmodul 28 anzukoppeln (siehe auch Fig. 4). Die Verbindung Heckmodul 28/Antriebsmodul 15 (15a) läßt sich also ebenso einfach realisieren wie die - aus Fig. 1 ersichtliche - Verbindung Frontmodul 10/Antriebsmodul 15.

Der Heckmodul 28 ermöglicht auch einen Einsatz eines sogenannten Hybrid-Antriebes.

Fig. 5 zeigt eine Variante, die derjenigen nach Fig. 2 und 4 ähnelt. Der (bei allen gezeigten Ausführungsformen gleichartige) Frontmodul 10 weist die schon bei den Ausführungsformen nach Fig. 1 bis 4 beschriebenen Konstruktionselemente auf und ist deshalb mit den entsprechenden Bezugszeichen wie in Fig. 1 bis 4 versehen. Auch der Heckmodul entspricht im großen und ganzen der Ausführungsform nach Fig. 2 und 4 und ist daher auch in Fig. 5 mit 28 bezeichnet.

Fig. 5 läßt besonders gut die Verwendung der Frontmodul-Heckklappe 25 als Dach für den Heckmodul 28 erkennen. Die hochgeschwenkte Heckklappe 25 wird nach vorherigem Zusammenbau von Frontmodul 10 und Heckmodul 28 abgesenkt und verschließt die Dachaussparung 37 des Heckmoduls 28. Hierzu besitzt die Heckklappe 25 einen Schließzapfen 49, der - nach entsprechender Absenkung der Heckklappe 25 - in eine korrespondierende Aufnahme 50 an der Dachaussparung 37 einrastet.

Fig. 5 zeigt eine weitere Besonderheit, die darin besteht, daß die Heckklappe 25 des Frontmoduls 10 zweigeteilt ausgebildet ist, derart, daß Heckklappenrahmen 51 und -scheibe 52 jeweils unabhängig voneinander verschwenkbar sind. Hierdurch ergibt sich die vorteilhafte Möglichkeit, die Fahrersitzreihe 14 (siehe Fig. 1 und 2) des Frontmoduls 10 durch die nach unten in den Innenraum des Frontmoduls 10 hinein verschwenkte Heckklappenscheibe 52 rückseitig gegenüber dem Heckmodul 28 vollständig räumlich abzutrennen. Der Heckklappenrahmen 51 hingegen bleibt nach oben verschwenkt und verrastet mittels der Schließelemente 49, 50 an der Dachaussparung 37 des Heckmoduls 28.

Diese Variante erlaubt eine vielfältige Verwendung des (nach oben offenen) Heckmoduls 28, z. B. als Laderaum für sperrige Güter. Das Gesamtfahrzeug fungiert somit in diesem Fall als Kleintransporter. Der Zugang zum Heckmodul 28 erfolgt durch die Hecktür 33.

Eine ähnliche Variante eines Heckmoduls zeigt Fig. 6. Dieses ist dort mit 28b beziffert. Es besitzt - im Unterschied zu der Ausführungsform nach Fig. 5 - eine zweigeteilte Hecktür 53. Seitenfenster wie bei Fig. 5 sind nicht vorgesehen.

Fig. 5 und 6 machen deutlich, daß sich durch geeignete Variation der Heckmodule die vielfältigsten Einsatzmöglichkeiten des betreffenden Gesamtfahrzeugs eröffnen. So können z. B. Mietwagen auf Park- und Rideplätzen je nach Bedarf der Kunden relativ leicht und einfach umgerüstet werden, etwa zu einem geräumigen Familienfahrzeug (Fig. 2, 4 und 5) oder auch zu einem Kleintransporter für Gewerbetreibende, für den Posttransport (Fig. 6) oder auch für den Transport von Campingbedarf und dergleichen mehr.

Heckmodule können je nach Wunsch vermietet (bzw. geleast) oder gekauft werden.

Elektrische und sonstige Versorgungsleitungen werden in den verschiedenen Heckvarianten durch zusätzliche Steckverbindungen, für die im Frontmodul 10 entsprechende Anschlüsse vorgesehen sind, überbrückt.

## Patentansprüche

1. Kraftfahrzeug, insbesondere Personenkraftwagen, mit einem Frontmodul (10), der die Vorderachse (11) mit Lenkung (12) und die Fahrgastkabine (13) mit einer Sitzreihe (14) umfaßt und der Aufnahmen (21, 22) zum lösbaren Ankoppeln eines auswechselbaren, aus Antriebsmotor, Getriebe und Hinterachse bestehenden Antriebsmoduls (15, 15a, 15b) besitzt, **gekennzeichnet durch** einen auswechselbaren Heckmodul (28, 28a, 28b) mit Kupplungselementen (35, 36), die mit den Aufnahmen (21, 22) am Frontmodul (10) korrespondieren und im Sinne einer lösbaren Verbindung zusammenwirken und mit Aufnahmen (45, 46) zum lösbaren Ankoppeln des Antriebsmoduls (15, 15a, 15b).

2. Kraftfahrzeug nach Anspruch 1, wobei der Frontmodul (10) eine Heckklappe (25) besitzt, die um eine an ihrer Oberkante (26) liegende Horizontalachse schwenkbar ist, **dadurch gekennzeichnet**, daß der auswechselbare Heckmodul (28, 28a, 28b) im Dachbereich eine den Konturen der Frontmodul-Heckklappe (25) entsprechende Aussparung (37) aufweist und daß beim Zusammenbau von Frontmodul (10) und Heckmodul (28, 28a, 28b) die nach oben geschwenkte Frontmodul-Heckklappe (25) die Aussparung (37) des Heckmoduls dichtend verschließt, derart, daß sie einen Teil des Daches des Gesamtfahrzeugs bildet (Fig. 4 bis 6).

3. Kraftfahrzeug nach Anspruch 2, wobei die Frontmodul-Heckklappe (25) von vorn/oben nach hinten/unten schräg abfallend angeordnet ist, derart, daß sich - an die Heckklappe (25) seitlich angrenzend - winkelförmige Karosserie-Endpartien (27) ergeben, **dadurch gekennzeichnet**, daß der auswechselbare Heckmodul (28) vorn beidseitig entsprechend winkelförmige Karosserieaussparungen (38) aufweist, in die die winkelförmigen seitlichen Karosserie-Endpartien (27) des Frontmoduls (10) bei der Montage von Front- und Heckmodul eingreifen (Fig. 2, 4 und 5).

4. Kraftfahrzeug nach Anspruch 3, **dadurch gekennzeichnet**, daß am auswechselbaren Heckmodul (28) - vorn/beidseitig und innenseitig der winkelförmigen Aussparungen (38) - Verbindungsbleche (39) angeordnet sind, die bei der Montage von Front- (10) und Heckmodul (28) die winkelförmigen Karosserie-Endpartien (27) des Frontmoduls (10) jeweils innenseitig hintergreifen, und daß an den Verbindungsblechen (39) seitliche Befestigungselemente (40) vorgesehen sind, die mit korrespondierenden seitlichen Befestigungselementen (41) am Frontmodul (10) zusammenwirken (Fig. 2 und 5).

5. Kraftfahrzeug nach Anspruch 4, **dadurch gekennzeichnet**, daß an den dem Frontmodul (10) zugewandten Vorderkanten der Verbindungsbleche (39) Dichtleisten (43) befestigt sind, die mit im Innern des Frontmoduls (10) angeordneten korrespondierenden Dichtungen (44) in der Montageposition von Front- und Heckmodul zur Anlage kommen (Fig. 2 und 5).

6. Kraftfahrzeug nach einem oder mehreren der vorstehenden Ansprüche, **dadurch gekennzeichnet**, daß der auswechselbare Heckmodul (28, 28a) den Fondbereich, enthaltend eine hintere Sitzreihe (31), Seitenscheiben (32) und Heckscheibe (33) sowie den Ladebereich (34) (Kofferraum), bildet bzw. umfaßt (Fig. 2, 4 und 5).

7. Kraftfahrzeug nach einem oder mehreren der Ansprüche 1 bis 5, **dadurch gekennzeichnet**, daß der auswechselbare Heckmodul (28, 28a, 28b) einen vom Heck her durch eine oder zwei Türen (33, 53) zugänglichen Laderaum umfaßt, derart, daß das aus Front-, Heck- und Antriebsmodul (15, 15a, 15b) zusammengesetzte Gesamtfahrzeug einen Kleintransporter mit nur einer vorderen Sitzreihe bildet (Fig. 5 und 6).

8. Kraftfahrzeug nach einem oder mehreren der vorstehenden Ansprüche, **dadurch gekennzeichnet**, daß die Heckklappe (25) des Frontmoduls (10) zweigeteilt ausgebildet ist, derart, daß Heckklappenrahmen (51) und -scheibe (52) jeweils unabhängig voneinander verschwenkbar sind (Fig. 5).

9. Kraftfahrzeug nach Anspruch 8, **dadurch gekennzeichnet**, daß der - hochgeschwenkte - Heckklappenrahmen (51) (mit) zur Verbindung von Front- (10) und Heckmodul (28, 28a, 28b) dient und die in nach unten geschwenkter Stellung belassene Heckklappenscheibe (52) eine Trennwand zwischen Fahrgastzelle und Rück- bzw. Laderaum bildet.

## Claims

1. Motor vehicle, in particular passenger car, with a front module (10) which includes the front axle (11) with steering (12) and the passenger compartment (13) with a row of seats (14) and which has receptacles (21, 22) for releasably coupling an exchangeable drive module (15, 15a, 15b) consisting of drive engine, gearbox and rear axle, characterised by an exchangeable rear module (28, 28a, 28b) with coupling elements (35, 36) which mate with the receptacles (21, 22) on the front module (10) and cooperate for the purpose of a releasable connection, and with receptacles (45, 46) for releasably coupling the drive module (15, 15a, 15b).

2. Motor vehicle according to claim 1, wherein the front module (10) has a rear door (25) which is pivotable about a horizontal axis located at its upper edge (26), characterised in that the exchangeable rear module (28, 28a, 28b) in the roof region comprises a recess (37) corresponding to the contours of the front module rear door (25) and in that on assembly of front module (10) and rear module (28, 28a, 28b) the upwardly pivoted front module rear door (25) sealingly closes the recess (37) of the rear module, such that it forms part of the roof of the whole vehicle (Figs. 4 to 6).

3. Motor vehicle according to claim 2, wherein the front module rear door (25) slopes down from top front to bottom rear, such that, laterally adjoining the rear door (25), angled body end sections (27) are formed, characterised in that the exchangeable rear module (28) comprises body recesses (38) which are correspondingly angled on both sides at the front and in which engage the angled lateral body end sections (27) of the front module (10) on assembly of front and rear modules (Figs. 2, 4 and 5).

4. Motor vehicle according to claim 3, characterised in that on the exchangeable rear module (28) - at the front on both sides and on the inside of the angled recesses (38) - are arranged connecting panels (39) which on assembly of front (10) and rear (28) modules in each case engage behind the angled body end sections (27) of the front module (10) in each case on the inside, and in that on the connecting panels (39) are provided lateral fastening elements (40) which cooperate with mating lateral fastening elements (41) on the front module (10) (Figs. 2 and 5).

5. Motor vehicle according to claim 4, characterised in that attached to the front edges of the connecting panels (39) facing towards the front module (10) are sealing strips (43) which come into abutment with mating seals (44) arranged inside the front module (10) in the assembled position of front and rear modules (Figs. 2 and 5).

6. Motor vehicle according to one or more of the preceding claims, characterised in that the exchangeable rear module (28, 28a) forms or includes the rear seat region, containing a rear row of seats (31), side windows (32) and rear window (33) as well as the loading region (34) (boot) (Figs. 2, 4 and 5).

7. Motor vehicle according to one or more of claims 1 to 5, characterised in that the exchangeable rear module (28, 28a, 28b) includes a loading space accessible from the rear through one or two doors (33, 53), such that the whole vehicle composed of front, rear and drive modules (15, 15a, 15b) forms a minitransporter with only a front row of seats (Figs. 5 and 6).

8. Motor vehicle according to one or more of the preceding claims, characterised in that the rear door (25) of the front module (10) is divided into two, such that rear door frame (51) and rear door window (52) are in each case pivotable independently of each other (Fig. 5).

9. Motor vehicle according to claim 8, characterised in that the (upwardly pivoted) rear door frame (51) also serves to connect front (10) and rear (28, 28a, 28b) modules, and the rear door window (52) left in the downwardly pivoted position forms a partition wall between passenger compartment and rear or loading space.

## Revendications

1. Véhicule automobile, notamment voiture particulière, comportant un module d'avant (10) qui comprend l'essieu avant (11) avec la direction (12) et l'habitacle (13) avec une rangée(14) de sièges pour les passagers et est pourvue de logements (21, 22) pour coupler de manière séparable un module de propulsion (15, 15a, 15b) interchangeable, comprenant le moteur de propulsion, la boîte de vitesses et l'essieu arrière, caractérisé par un module d'arrière (28, 28a, 28b) interchangeable pourvu d'éléments d'accouplement (35, 36) qui correspondent et coopèrent dans le sens d'une liaison séparable avec les logements (21, 22) sur le module d'avant (10) et de logements (45, 46) pour coupler de manière séparable le module de propulsion (15, 15a, 15b).

2. Véhicule automobile selon la revendication 1, dans lequel le module d'avant (10) comporte un hayon arrière (25) qui peut pivoter autour d'un axe horizontal situé au niveau de son bord supérieur (26), caractérisé par le fait que le module d'arrière (28, 28a, 28b) interchangeable présente, dans la région du toit, une découpe (37) qui correspond à la forme du hayon arrière (25) du module d'avant et par le fait que, lors de l'assemblage du module d'avant (10) avec le module d'arrière (28, 28a, 28b), le hayon arrière (25) de module d'avant, pivoté vers le haut, ferme de manière étanche la découpe (37) du module d'arrière de telle sorte qu'elle forme une partie du toit du véhicule complet (figures 4 et 6).

3. Véhicule automobile selon la revendication 2, dans lequel le hayon arrière (25) de module d'avant est incliné de l'avant/haut vers l'arrière/bas de telle sorte que des parties terminales (27) de carrosserie en forme de coins sont formées sur les côtés du hayon arrière (25), caractérisé par le fait que le module d'arrière (28) comporte sur le devant, des deux côtés, des découpes de carrosserie (38) adaptées en forme de coins dans lesquelles pénètrent les parties terminales (27) de carrosserie en forme de coins du module d'avant (10) lors de l'assemblage du module d'avant avec le module d'arrière (figures 2, 4 et 5).

4. Véhicule automobile selon la revendication 3, caractérisé par le fait que des tôles de liaison (39) sont disposées sur le module d'arrière (28) interchangeable - sur le devant/des deux côtés et côté intérieur des découpes (38) en forme de coins, lesquelles tôles, lors de l'assemblage du module d'avant (10) avec le module d'arrière (28) s'engagent derrière les parties terminales (27) de carrosserie en forme de coins du module d'avant (10), côté intérieur, et par le fait qu'il est prévu sur les tôles de liaison (39) des éléments de fixation (40) latéraux qui coopèrent avec des éléments de fixation (41) latéraux correspondants sur le module d'avant (10) (figures 2 et 5).

5. Véhicule automobile selon la revendication 4, caractérisé par le fait que des joncs d'étanchéité (43) sont fixés sur les bords antérieurs des tôles de liaison (39) tournés vers le module d'avant (10), joncs d'étanchéité qui, en position assemblée du module d'avant et du module d'arrière viennent en contact avec des joints (44) correspondants disposés à l'intérieur du module d'avant (10) (figures 2 et 5).

6. Véhicule automobile selon une ou plusieurs des revendications précédentes, caractérisé par le fait que le module d'arrière (28, 28a) interchangeable forme, voire comprend la région du fond englobant une rangée de sièges arrière (31), des glaces latérales (32), une glace arrière (33) et la zone de chargement (34) (coffre à bagages) (figures 2, 4 et 5).

7. Véhicule automobile selon une ou plusieurs des revendications 1 à 5, caractérisé par le fait que le module d'arrière (28, 28a, 28b) interchangeable comprend un espace de chargement accessible par l'arrière par une ou deux portes (33, 53), de telle sorte que le véhicule complet composé du module d'avant, du module d'arrière et du module de propulsion (15, 15a, 15b) forme un petit véhicule de transport avec seulement une rangée de sièges avant (figures 5 et 6).

8. Véhicule automobile selon une ou plusieurs des revendications précédentes, caractérisé par le fait que le hayon arrière (25) du module d'avant (10) est divisé en deux parties, de telle sorte que le cadre (51) de hayon et la glace (52) de hayon puissent pivoter indépendamment l'un de l'autre (figure 5).

9. Véhicule automobile selon la revendication 8, caractérisé par le fait que le cadre (51) de hayon arrière pivoté vers le haut sert (lui aussi) à l'assemblage du module d'avant (10) avec le module d'arrière (28, 28a, 28b) et que la vitre (52) de hayon arrière, laissée en position rabattue vers le bas, forme une cloison de séparation entre l'habitacle et l'espace arrière ou de chargement.
